# EUROPEAN PATENT APPLICATION

(11) **EP 4 246 776 A1**
(43) Date of publication of application: **20.09.2023**
(21) Application number: 22162431.5
(22) Date of filing: 16.03.2022
(51) Int. Cl.: H02K 1/2791, H02K 7/18, H02K 15/03

(54) **ASSEMBLY OF A GENERATOR FOR A WIND TURBINE**

(71) Applicant: Siemens Gamesa Renewable Energy A/S, 7330 Brande (DK); Siemens Gamesa Renewable Energy GmbH & Co. KG, 20097 Hamburg (DE)
(72) Inventor: Fürst-Sylvester, Marius, 27478 Cuxhaven (DE); Henriksen, Benjamin, 7400 Herning (DK); Schneider, Thorsten, 27478 Cuxhaven (DE); Soerensen, Martin Bach, 7400 Herning (DK)
(74) Representative: SGRE-Association

(57) **Abstract**

It is disclosed a measurement and sorting arrangement for a plurality of magnets (36) for a rotor (30) of an electrical machine (10), the rotor (30) including a rotor house (31) and a plurality of permanent magnets (36). The arrangement includes:
a measurement station for measuring at least a dimension of a magnet (36) along a direction which is subject to be aligned with a radial direction of the rotor (30),
a storage for storing a plurality of magnets (36) based on the results of the step of measuring (120).

## Description

### Field of the invention

The invention relates to a method and an arrangement for measuring and sorting a plurality of magnets for a rotor of an electrical generator. The invention further relates to a method for assembling an electrical generator. Particularly, but not exclusively, the invention can be applied to an electrical generator for a wind turbine.

### Art background

The airgap, which is formed between the stator and a rotor in a wind turbine electrical generator is an important design feature that contributes to the overall efficiency of the wind turbine. The tighter the airgap is and the less it fluctuates over the lateral surfaces at the axial ends of the stator and the rotor, the more energy can be generated and the higher the efficiency is. Fluctuations of the airgap are in particular influenced by the eccentricity of the coupling between the stator and the rotor of the electrical generator. The overall eccentricity is determined in the rotor by the shape of the rotor house and of the bearing assembly and by the different radial extensions of the magnets.

It is therefore desirable to provide a method and an arrangement for measuring and storing a plurality of magnets for a rotor of an electrical generator. It is further desirable to provide a method for assembling an electrical generator, which minimizes the air gap to a minimum desired and constant value.

### Summary of the invention

This need may be met by the subject matter according to the independent claims. Advantageous embodiments of the present invention are described by the dependent claims.

According to a first aspect of the present invention it is provided a measurement and sorting arrangement for a plurality of magnets for a rotor of an electrical machine, the rotor including a rotor house and a plurality of permanent magnets attached to the rotor house, the arrangement including:
a measurement station for measuring at least a dimension of a magnet along a direction which is subject to be aligned with a radial direction of the rotor,
a storage for storing a plurality of magnets based on the results of the step of measuring.

According to a second aspect of the invention it is provided a method for measuring and sorting a plurality of magnets for a rotor of an electrical machine, the rotor including a rotor house and a plurality of permanent magnets, the method including the steps of:
receiving a plurality of magnets to be mounted on the rotor,
measuring for each magnet at least a magnet dimension along a direction which is subject to be aligned with a radial direction of the rotor,
storing the plurality of magnets based on the results of the step of measuring.

The method may partly be implemented in software and/or hardware. The electrical machine may be an electrical generator or an electrical motor. In particular, the electrical machine may be an electrical generator of a wind turbine.

It should be understood, that features, individually or in any combination, disclosed, described, explained or provided for a measurement and sorting arrangement are also, individually or in any combination, applicable to a a method for measuring and sorting a plurality of magnets according to embodiments of the present invention and vice versa, as further clarified in the following.

According to embodiments of the present invention, the measurement and sorting arrangement includes at least a first handling device for moving the plurality of magnets from the measurement station to the storage. The measurement and sorting arrangement may further include at least a second handling device for moving the plurality of magnets from the storage towards an assembly station for mounting the magnets in the rotor.

The present invention provides a measurement and sorting system for an electrical machine which permits to manage the magnets so that they can be easily and quickly handled, based on their dimension along a direction which is subject to be aligned with a radial direction of the rotor. According to present invention, each magnet is therefore treated as a unique component, based on its dimensions.

According to a third aspect of the invention it is provided an assembly method for assembling an electrical machine, the electrical machine including a stator and a rotor, the rotor having a rotor house and a plurality of magnets, the rotor house including a plurality of seats, each being subject to receiving a respective magnet, the method including the steps of:
receiving data about a plurality of magnets including for each magnet at least a magnet dimension along a direction which is subject to be aligned with a radial direction of the rotor,
receiving data about the position of the plurality of seats with respect to an axis of the rotor,
determining for each magnet a matching seat based on the data about magnet dimension and seat position so that the air gap between stator and rotor is optimized at desired minimum value when each magnet is inserted in the respective matching seat.

The assembly method according to the present invention permits to conveniently couple a plurality of magnets in the plurality of seats, so that, for example, a magnet having a maximum radial thickness may be conveniently mounted in the seat having the maximum distance from the rotor axis and a magnet having a minimum radial thickness may be conveniently mounted in the seat corresponding to the minimum distance from the rotor axis. Thus, the thickness of the air gap may be kept constant and as close as possible to a minimum desired value. The present invention provides an improvement of the overall eccentricity of the coupling between stator and rotor by conveniently positioning the magnets.

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a partial view of a wind turbine including an electrical generator.
- Figure 2: shows a schematic section of an electrical generator to be mounted on the wind turbine of Fig. 1.
- Figure 3: shows a more precise schematic section of an elec-trical generator to be mounted on the wind turbine of Fig. 1.
- Figure 4: shows an exploded view of an electrical generator to be mounted on the wind turbine of Fig. 1.
- Figure 5: shows a block diagram illustrating steps of a method for measuring and sorting a plurality of magnets, according to the present invention.
- Figure 6: shows portions of an arrangement for measuring and sorting a plurality of magnets, according to the present invention.
- Figure 7: shows further portions of the arrangement of figure 6, showing a store for the magnets.
- Figure 8: shows further portions of the arrangement of figure 6, showing an handling phase of the magnets.
- Figure 9: illustrates a first embodiment of a method of assem-bling an electrical generator according to the pre-sent invention.

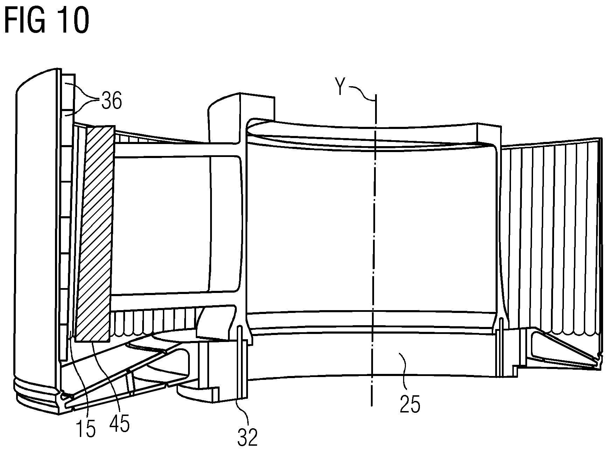

- Figure 10: illustrates a second embodiment of a method of assembling an electrical generator according to the present invention.

### Detailed Description

The illustrations in the drawings are schematic. It is noted that in different figures, similar or identical elements are provided with the same reference signs.

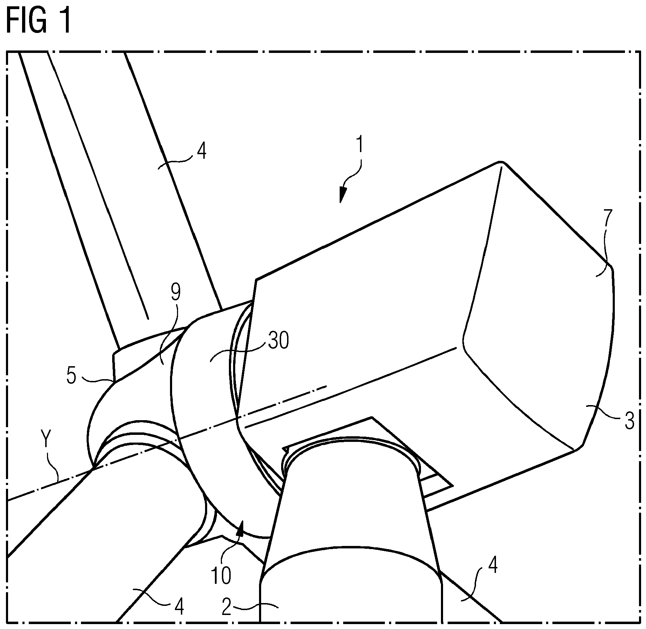

**Figure 1** shows a wind turbine 1 according to the invention. The wind turbine 1 comprises a tower 2, which is mounted on a non-depicted foundation. A nacelle 3 is arranged on top of the tower 2. The nacelle 3 comprises a main frame 7 rotatably coupled with the tower 2, an electrical generator 10 rotatably coupled with the main frame 7 and an hub 9 fixed to a rotor 30 of the electrical generator 10. The wind turbine 1 further comprises a wind rotor 5 including the hub 9 and at least one blade 4 fixed to the hub 9 (in the embodiment of Figure 1, the wind rotor comprises three blades 4. The wind rotor 5 is rotatable around a rotational longitudinal axis Y. The blades 4 extend substantially radially with respect to the longitudinal rotational axis Y. In general, when not differently specified, the terms axial, radial and circumferential in the following are made with reference to the longitudinal rotational axis Y. The electrical generator 10 including the rotor 30 and a stator (not visible in figure 1) fixed to the main frame 7 of the nacelle 3. In the embodiment of the attached figures the rotor 30 is radially external to the stator. The rotor 30 is rotatable with respect to the stator about the longitudinal rotational axis Y.

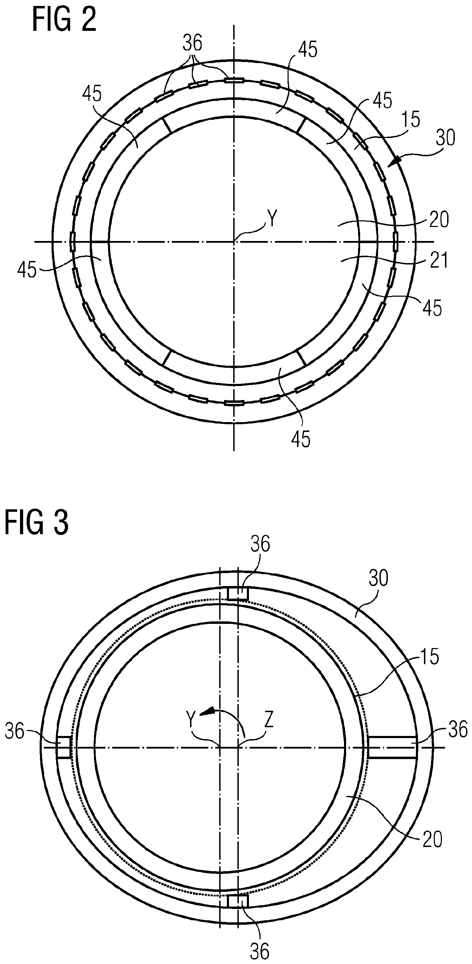

**Figure 2** shows a schematic view of a cross section of the electrical generator 10 on a radial plane orthogonal to the longitudinal rotational axis Y. The electrical generator 10 including the rotor 30 and the stator 20, which is radially internal to the rotor 30. In Fig. 2 the rotor 30 and the stator 20 are ideally represents as two coaxial ideal cylinders. The electrical generator 10 comprises an airgap 15 radially interposed between the stator 20 and the rotor 30, the airgap 15 extending circumferentially about the rotational axis Y. The stator 20 comprises a cylindrical inner core 21 to which six segments 45 are attached. Each segment 45 has a circumferential angular extension of 60°. According to other embodiments of the present invention, the stator 20 comprises a plurality of segments having another number (different from six) of segments. The rotor 30 comprises a plurality of circumferentially distributed permanent magnets 36 facing the airgap 15.

**Figure 3** shows a more precise representation of the same cross section of figure 2. In a real electrical generator 10 the stator 20 and the rotor 30 has real shapes which are different from ideal cylindrical shapes. Further due to coupling tolerances the fixed axis of rotation Y of the rotor 30 is not exactly coincident with the longitudinal geometric axis Z of the rotor 30, which rotates about the fixed axis of rotation Y. As a result of such shape deviations and eccentricity, the air gap 15 has also not a regular annular shape of constant thickness, but the real thickness of the air gap 15 oscillates between a minimum and a maximum. This variability of the thickness of the air gap 15 may be compensated by arranging a plurality of magnets 36 on the rotor 30, the magnets 36 having a variable extension along the radial direction, according to the present invention and as specified in the following.

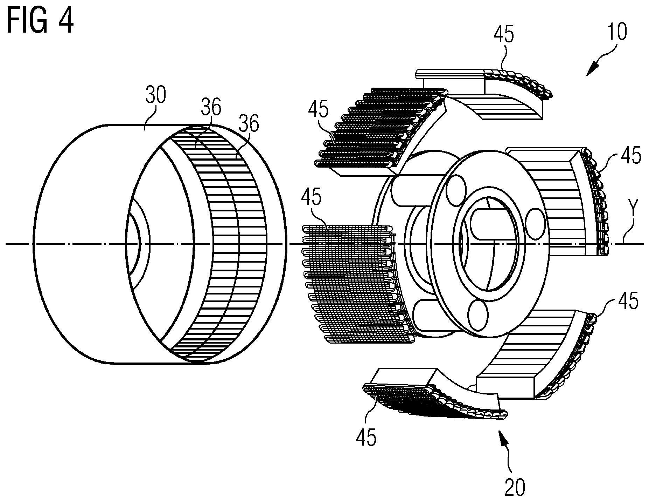

**Figure 4** shows an exploded view of the electrical generator 10 showing axonometric schematic representation of the rotor 30 and the stator 20. The rotor 30 comprises a cylindrical rotor house 31 axially extending between a drive end 37, which is subject to be mounted adjacent to the hub of the wind rotor 5, and an axially opposite non-drive end 38, which is subject to be mounted adjacent to the main frame 7 of the nacelle 3. The rotor house has cylindrical hollow shape radially extending between an inner surface 39, on which a plurality of respective seats for the permanent magnets 36 are defined, and an external surface 42. The magnets 31 are distributed on the inner side 39 of the rotor house 31 according to axial columns. Each column of magnets comprises a plurality of magnets 36 (for example two magnets 36 as shown in figure 2) aligned along the rotational axis Y.

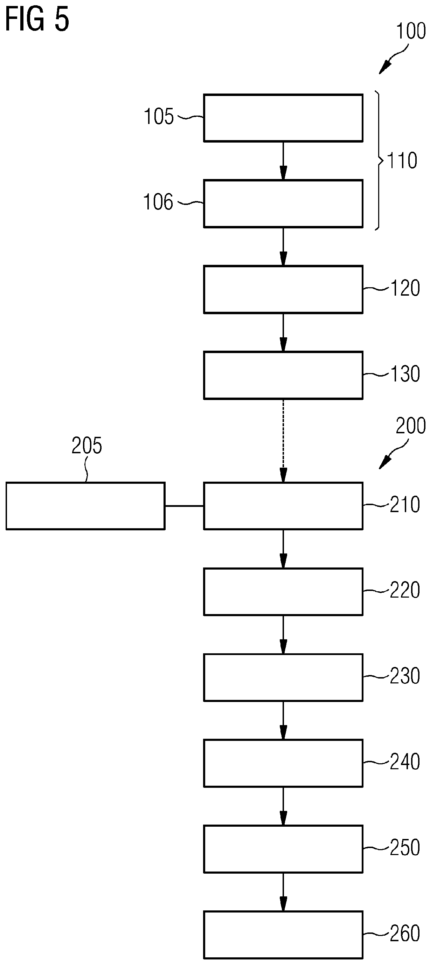

With reference to **Figures 5** to **8****,** a method 100 for measuring and sorting a plurality of magnets 36 for the rotor 30 including a first step 110 of receiving a plurality of magnets 36 to be mounted on the rotor 30. The first step 110 may include a first sub-step 105 of receiving as input at least one pallet 53 including a plurality of magnets 36 and a second sub-step 106 of unpacking the plurality of magnets 36 from the pallet 53. The method 100 includes a second step 120 to be performed after the first step 110. The second step 120 includes measuring for each unpacked magnet 36 at least a magnet dimension along a direction which is subject to be aligned with a radial direction of the rotor 30.

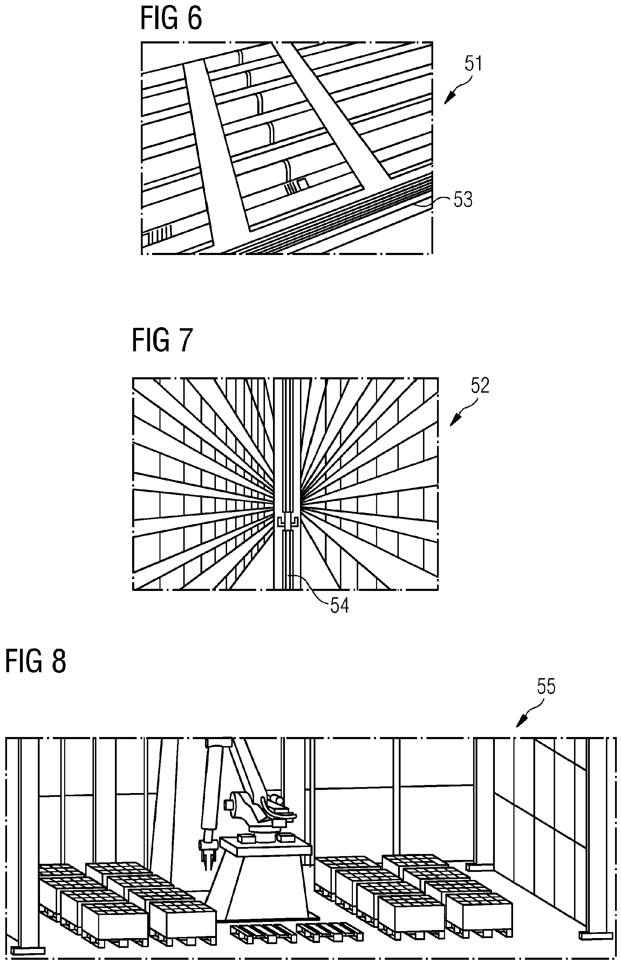

The first step 110 and the second step 120 are performed in a measurement station 51 of a measurement and sorting arrangement 51, 52 (figure 6 and 7) according to the present invention.

The method 100 includes a further third step 120 to be performed after the second step 120. The third step 130 includes storing the plurality of magnets 36 based on the results of the step of measuring 120. The plurality of magnets 36 are sorted and stored based on their dimensions along a direction which is subject to be aligned with a radial direction of the rotor 30.

The third step 130 is performed in a storage 52 for storing the plurality of magnets 36 based on the results of the measuring 120. The measurement and sorting arrangement 51, 52 may include a first handling device 54 for moving the plurality of magnets 36 from the measurement station 51 to the storage 52. The measurement and sorting arrangement may further include a second handling device 55 for moving the plurality of magnets 36 from the storage 52 towards an assembly station for mounting the magnets in the rotor 30, as specified in the following.

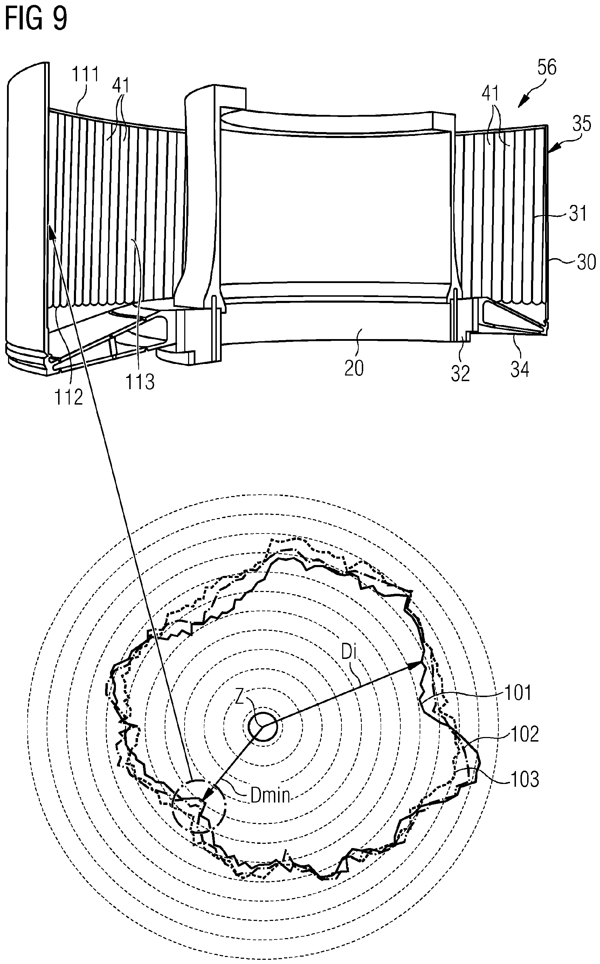

With reference to **Figures 5** and **9****,** an assembly method 200 including steps for assembling the electrical generator 10 is provided. The assembly method 200 includes a preliminary assembly step 205 of coupling the stator 20 with a preassembled rotor 35 including the rotor house 31. The preassembled rotor 35 includes the rotor house 31 and a rotor bearing 32 connected to one another through an inner rotor plate 34. The rotor bearing 32 is coupled to a fixed shaft 25 of the stator 20. On the inner surface 39 of the rotor house 31 a plurality of axially extending seats 41 for the permanent magnets 36 are defined. The assembly method 200 includes a first step 210 of receiving data about a plurality of magnets 36 including for each magnet 36 at least a magnet dimension along a direction which is subject to be aligned with a radial direction of the rotor 30. The data regarding the dimensions of the magnets 36 may be obtained with the previously described method 100 for measuring and sorting a plurality of magnets 36. The assembly method 200 includes a second step 220 of receiving data about the position of the plurality of seats 41 with respect to the axis Z. Such data may include a plurality of curves 101, 102, 103, which graphically the positions of respective plurality of points 111, 112, 113 of the rotor house 31 with respect to an axis Z of the rotor house 31. Three pluralities of points 111, 112, 113 may be respectively defined along the plurality of seats 41 respectively at the drive end 37, at the opposite axial ends of the seat 41, i.e. the axial ends of the seat 41 that are closer to the non-drive end 38, and at an intermediate positions between the first plurality of points 111 and the second plurality of points 112. The three plurality of points 113 may lie on three respective planes orthogonal the axis Z. At each angular position about the axis Z the radial distance Di of the points of each of the three curves 101, 102, 103 represents the distance of a respective magnet seat 41 from the axis Z. The value of Di varies about the axis Z, spanning from a minimum value Dmin to a maximum value Dmax. The set of measurements Di provides information about the shape of the rotor house 31, i.e. the distance of the plurality of seats 41 from the axis Z. The assembly method 200 includes a second step 220. The assembly method 200 includes a third step 230 of determining for each magnet 36 a matching seat 41 based on the data about magnet dimension and seat position so that the air gap 15 is optimized at desired minimum value when each magnet is inserted in the respective matching seat 41. A magnet 36 having a maximum radial thickness may be conveniently mounted in the seat 41 corresponding to the maximum value Dmax and a magnet 36 having a minimum radial thickness may be conveniently mounted in the seat 41 corresponding to the minimum value Dmin. After the match between the seats 41 and the magnets 36 has been determined in the third step 230, the assembly method 200 includes a fourth step 240 of moving the plurality of magnets 36 from a storage 52 towards an assembly station 56 for mounting the magnets in the rotor house 31. In a further fifth step 250 each magnet 36 is magnetized. In a further sixth step 260 each magnet 36 is inserted and couple to the respective position in the respective seat 41.

The steps of magnetizing 250 the plurality of magnets 36 and inserting 260 each magnet 36 in the respective position in the respective matching seat 41 are performed in a magnetizing and inserting cell.

In the embodiment of figure 9, the matching seats 41 of the magnets 36 are determined so that the air gap 15 has a cylindrical or substantially cylindrical shape about an axis of rotation Y of the electrical machine 10. The convenient position of the magnets 36 according to the above-described procedure provides an improvement of the overall eccentricity of the coupling between stator and rotor by conveniently positioning the magnets

In the embodiment of figure 9, the matching seats 41 of the magnets 36 are determined so that the air gap 15 has a conical or substantially conical shape about an axis of rotation Y of the electrical machine 10. To obtain that, the magnets can be sorted in groups of different heights, each group, for example, being respectively used close to the drive end 37, or to the non-drive end 38 or between the drive end 37 and the non-drive end 38. This embodiment may provide a convenient solution if the plurality of magnets 36 is characterized by optimally managing tolerances even in the case of a high variability of the magnet dimensions. In such an embodiment, the segments 45 have to be arranged consequently to provide a conical shape of the stator 20, so that the thickness of the air gap 15 can be maintained as constant as possible between the drive end 37 and the non-drive end 38.

## Claims

1. A measurement and sorting arrangement for a plurality of magnets (36) for a rotor (30) of an electrical machine (10), the rotor (30) including a rotor house (31) and a plurality of permanent magnets (36) attached to the rotor house (31), the arrangement including:
a measurement station (51) for measuring at least a dimension of a magnet (36) along a direction which is subject to be aligned with a radial direction of the rotor (30),
a storage (52) for storing a plurality of magnets (36) based on the results of the step of measuring (120).

2. The measurement and sorting arrangement according to claim 1, wherein the arrangement includes:
at least a first handling device (54) for moving the plurality of magnets (36) from the measurement station (51) to the storage (52).

3. The measurement and sorting arrangement according to claim 1 or 2, wherein the arrangement includes:
at least a second handling device (55) for moving the plurality of magnets (36) from the storage (52) towards an assembly station for mounting the magnets in the rotor (30).

4. A method (100) for measuring and sorting a plurality of magnets (36) for a rotor (30) of an electrical machine (10), the rotor (30) including a rotor house (31) and a plurality of permanent magnets (36), the method including the steps of:
receiving (110) a plurality of magnets (36) to be mounted on the rotor (30),
measuring (120) for each magnet (36) at least a magnet dimension along a direction which is subject to be aligned with a radial direction of the rotor (30),
storing (130) the plurality of magnets (36) based on the results of the step of measuring (120).

5. An assembly method (200) for assembling an electrical machine (10), the electrical machine (10) including a stator (20) and a rotor (30), the rotor having a rotor house (31) and a plurality of magnets (36), the rotor house (31) including a plurality of seats, each being subject to receiving a respective magnet (36), the method including the steps of:
receiving data (210) about a plurality of magnets (36) including for each magnet (36) at least a magnet dimension along a direction which is subject to be aligned with a radial direction of the rotor (30),
receiving data (220) about the position of the plurality of seats (41) with respect to an axis of the rotor (30),
determining (230) for each magnet a matching seat (41) based on the data about magnet dimension and seat position so that the air gap (15) between stator and rotor is optimized at desired minimum value when each magnet is inserted in the respective matching seat.

6. The assembly method (200) according to claim 5, including the further steps of:
moving (240) the plurality of magnets (36) from the storage (52) towards an assembly station for mounting the magnets in the rotor (30).

7. The assembly method (200) according to claim 5 or 6, including the further steps of:
coupling (205) the stator (20) with a preassembled rotor including the rotor house (31),
magnetizing (250) the plurality of magnets,
inserting (260) each magnet in the in the respective matching seat (41).

8. The assembly method (200) according to claim 7, wherein the steps of magnetizing (250) the plurality of magnets (36) and inserting (260) each magnet in the respective matching seat (41) are performed in a magnetizing and inserting cell.

9. The assembly method (200) according to any of the claims 5 to 8, wherein the matching seats (41) of the magnets (36) are determined so that the air gap (15) has a substantially cylindrical shape about an axis of rotation (Y) of the electrical machine (10).

10. The assembly method (200) according to any of the claims 5 to 8, wherein the matching seats (41) of the magnets (36) are determined so that the air gap (15) has a substantially conical shape about an axis of rotation (Y) of the electrical machine (10).
